# EUROPEAN PATENT APPLICATION

(11) **EP 3 805 352 A1**
(43) Date of publication of application: **14.04.2021**
(21) Application number: 18921553.6
(22) Date of filing: 07.06.2018
(51) Int. Cl.: C12C 5/02

(54) **BEER-TASTE BEVERAGE AND METHOD FOR PRODUCING SAME**

(71) Applicant: Suntory Holdings Limited, Osaka 530-8203 (JP)
(72) Inventor: INUI, Takako, Mishima-gun, Osaka, 618-0001 (JP); YONEZAWA, Daisaku, Soraku-gun, Kyoto, 619-0284 (JP)
(74) Representative: Vossius & Partner Patentanwälte Rechtsanwälte mbB
(86) International application number: PCT/JP2018/021912
(87) International publication number: WO 2019/234889

(57) **Abstract**

A beer-taste beverage, containing a carbon dioxide-extracting product of a plant raw material containing coriander seeds. The present invention provides a beer-taste beverage which is capable of favorably providing a flavor of coriander seeds and a method for producing the same, which can provide a new taste as luxury products.

## Description

### TECHNICAL FIELD

The present invention relates to a beer-taste beverage and a method for producing the same.

### BACKGROUND ART

With the diversification of the inclinations of the consumers in the recent years, the development of beer-taste beverages having various flavor characteristics has been desired.

For example, a beer-taste beverage having a flavor of coriander seeds has been provided by including introducing coriander seeds to a sugar liquid of a wort or the like and heating them.

### SUMMARY OF THE INVENTION

### PROBLEMS TO BE SOLVED BY THE INVENTION

However, in a conventional method, a flavor of coriander seeds has not been well provided in some cases.

An object of the present invention is to provide a beer-taste beverage favorably provided with a flavor of coriander seeds, and a method for producing the same.

### MEANS TO SOLVE THE PROBLEMS

The present invention relates to:
[1] a beer-taste beverage containing a carbon dioxide-extracting product of a plant raw material containing coriander seeds;
[2] a method for producing a beer-taste beverage, including extracting step: extracting a plant extract from a plant raw material containing coriander seeds with carbon dioxide as an extraction solvent, separating step: separating the plant extract extracted in the extracting step from carbon dioxide, and
   adding step: adding a carbon dioxide-extracting product obtained in the separating step during the production steps for a beer-taste beverage;
[3] a beer-taste beverage wherein a content of valencene is 1.0 ppb or less, or a content of nootkatone is 1.0 ppb or less, and wherein a ratio of a content of limonene to a content of linalool (limonene / linalool) is 1.0% or more; and
[4] a beer-taste beverage wherein a content of valencene is 1.0 ppb or less, or a content of nootkatone is 1.0 ppb or less, and wherein a ratio of a content of γ-terpinene to a content of linalool (y-terpinene / linalool) is 0.5% or more.

### EFFECTS OF THE INVENTION

According to the present invention, a beer-taste beverage favorably provided with a flavor of coriander seeds and a method for producing the same can be provided.

### BRIEF DESCRIPTION OF THE DRAWINGS

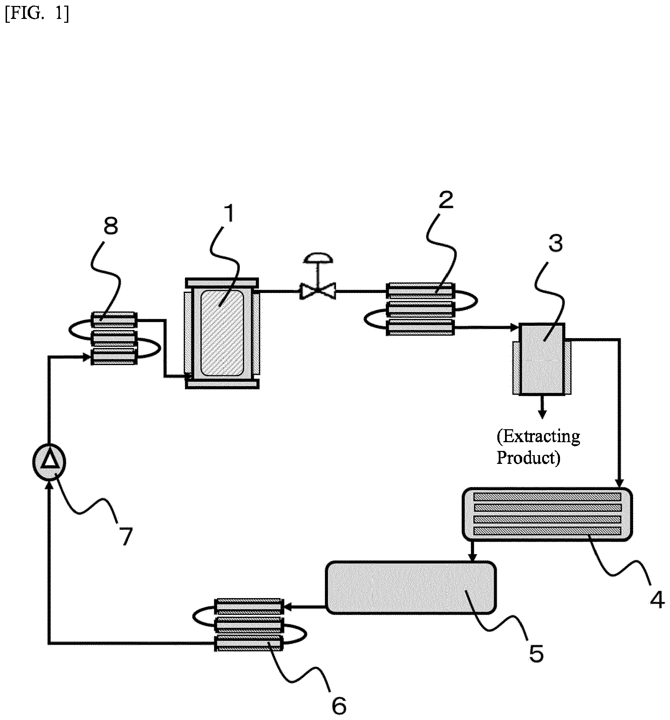

[FIG. 1] Showing a scheme of a carbon dioxide circulation type apparatus used in Preparation Examples 1 to 3.

### MODES FOR CARRYING OUT THE INVENTION

The beer-taste beverage according to the present invention contains a carbon dioxide-extracting product of a plant raw material containing coriander seeds.

The plant raw material may at least contain coriander seeds, which may be raw materials containing sites other than seeds and a plant other than coriander within the scope that exhibits the effects of the present invention.

The carbon dioxide-extracting product is obtained by extracting a plant extract from a plant raw material containing coriander seeds with carbon dioxide as an extraction solvent, and separating the extracted plant extract from carbon dioxide. Since the carbon dioxide-extracting product obtained as described above has a large content of a terpene-based hydrocarbon, as compared to a conventional case where coriander seeds are placed in a wort and subjected to thermal extraction, it is assumed that the extracting product can favorably provide a beer-taste beverage with a flavor of coriander seeds.

The ratio of a content of limonene to a content of linalool in the carbon dioxide-extracting product (limonene / linalool) is preferably 1.5% or more, more preferably 1.8% or more, even more preferably 2.0% or more, and even more preferably 4.0% or more, from the viewpoint of favorably providing a flavor of coriander seeds. The upper limit may be, but not particularly limited to, 10.0% or less.

The ratio of a content of γ-terpinene to a content of linalool in the carbon dioxide-extracting product (y-terpinene / linalool) is preferably 1.5% or more, more preferably 2.0% or more, even more preferably 4.0% or more, and even more preferably 5.0% or more, from the viewpoint of favorably providing a flavor of coriander seeds. The upper limit may be, but not particularly limited to, 10.0% or less.

The content of the carbon dioxide-extracting product in the beer-taste beverage according to the present invention is preferably from 0.01 to 0.05% by mass, more preferably from 0.1 to 0.5% by mass, and even more preferably from 1.0 to 6.5% by mass, from the viewpoint of favorably providing a flavor of coriander seeds.

The method for producing a beer-taste beverage of the present invention includes
extracting step: extracting a plant extract from a plant raw material containing coriander seeds with carbon dioxide as an extraction solvent,
separating step: separating the plant extract extracted in the extracting step from carbon dioxide, and
adding step: adding a carbon dioxide-extracting product obtained in the separating step during the production steps for a beer-taste beverage.

In the extracting step, a plant raw material supplied into an extraction tank is contacted with carbon dioxide as an extraction solvent to extract a plant extract in carbon dioxide from the plant raw material. Here, carbon dioxide may be a supercritical carbon dioxide or a liquid carbon dioxide.

The plant raw material subjected to the extracting step is as mentioned above.

S/F (the mass ratio of carbon dioxide to the raw materials) in the extracting step is preferably from 20 to 50, more preferably from 30 to 50, and even more preferably from 40 to 50, from the viewpoint of the amount of yield.

The density of carbon dioxide in the extracting step is preferably from 400 to 1000 kg/m³, more preferably from 600 to 1000 kg/m³, and even more preferably from 700 to 1000 kg/m³, from the viewpoint of the amount of yield.

The pressure of carbon dioxide in the extracting step is from 6 to 50 MPa, more preferably from 6 to 30 MPa, and even more preferably from 6.5 to 9.0 MPa, from the viewpoint of the amount of yield. The pressure of carbon dioxide in the extracting step refers to a pressure inside an extraction tank.

The temperature in the extracting step is preferably from 10°C to 60°C, more preferably from 10°C to 55°C, and even more preferably from 10°C to 50°C, from the viewpoint of the amount of yield and quality. The temperature in the extracting step refers to a temperature inside an extraction tank.

The extraction time is, but not particularly limited to, preferably 1.0 hour or more, more preferably 2.0 hours or more, and even more preferably 3.0 hours or more, from the viewpoint of the amount of yield.

As the extraction tank used in the extracting step, a known one can be used, and, for example, a stainless steel pressurized vessel or the like, which is completely cut off from the external can be used.

In the separating step, the density of carbon dioxide is decreased by lowering a pressure of carbon dioxide, increasing a temperature in the separation tank, or the like to lower its ability as a solvent, thereby separating the plant extract obtained in the extracting step from carbon dioxide.

The pressure of carbon dioxide in the separating step is from 4.0 to 6.0 MPa, more preferably from 4.0 to 5.0 MPa, and even more preferably from 4.5 to 4.8 MPa, from the viewpoint of the amount of yield. The pressure of carbon dioxide in the separating step refers to a pressure inside a separation tank.

The temperature in the separating step is preferably 40°C or lower, more preferably 30°C or lower, even more preferably 25°C or lower, and even more preferably 20°C or lower, from the viewpoint of the amount of yield. The lower limit can be, but not particularly limited to, for example, 0°C or higher. The temperature in the separating step refers to a temperature inside a separation tank.

As a separation tank used in the separating step, a known one can be used, for example, a stainless steel vessel or the like can be used.

The preferred ranges of the ratio of a content of limonene to a content of linalool (limonene / linalool) and the ratio of a content of y-terpinene (y-terpinene / linalool), based on linalool, in the carbon dioxide-extracting product obtained in the separating step are as mentioned above.

In the adding step, the carbon dioxide-extracting product is added during the production steps for a beer-taste beverage. The carbon dioxide-extracting product obtained in the separating step is obtained in the form of a mixture of an aqueous layer and an oil layer, which may be directly used, or may be centrifuged or the like to obtain only an oil layer in which the aroma is present and used.

In the adding step, as to the addition of the carbon dioxide-extracting product, the carbon dioxide-extracting product can be added at any timing so long the timing is during the production steps for a beer-taste beverage. In the present invention, the beer-taste beverage may be a beer-taste beverage containing an alcohol, or a nonalcoholic beer-taste beverage, each of which can be produced by a known production method. The methods of production in each of the cases will be exemplified hereinbelow, without intending to limit the present invention to these embodiments.

One embodiment of the beer-taste beverage according to the present invention includes a beer-taste beverage containing an alcohol, which can be produced in the same manner as in general beer-taste beverages, except that a carbon dioxide-extracting product obtained in the separating step is added during the production steps for a beer-taste beverage. In addition, the alcohol as used herein refers to ethanol, and the ethanol content, in terms of a volume ratio, is, but not particularly limited to, preferably from 1% to 10%. Further, the origin of the alcohol component contained in the beer-taste beverage is not limited to fermentation and non-fermentation. A production process for a general beer-taste beverage will be shown hereinbelow. A general beer-taste beverage is one in which malts are used or not used as raw materials, which can be produced in the following manner.

As to the beer-taste beverage containing an alcohol produced using malts as raw materials, first, to a mixture containing raw materials such as wheat such as malts, optionally other grains, starches, sugars, and a bittering agent, or a colorant, and water is added an enzyme such as amylase optionally to carry out gelatinization or saccharification, and the mixture is then filtered, to provide a saccharified liquid. Hops, a bittering agent or the like is optionally added to the saccharified liquid, and a mixture is boiled, to remove solid contents such as coagulated proteins in a clearing tank. As a substitute for this saccharified liquid, hops may be added to a malt extract added with a hot water, and the mixture may be boiled. The hops may be mixed at any stage from the beginning of boiling to before the termination of boiling. As the conditions in the saccharification step, the boiling step, the solid content removal step, and the like, known conditions may be used. As the conditions in the fermentation and storage (stored liquor) steps, known conditions may be used. The fermentation liquid obtained is filtered, and a carbon dioxide gas is added to a filtrate obtained. Thereafter, a vessel is filled, and subjected to a sterilizing step, to obtain an intended beer-taste beverage. At this time, in order to obtain a more preferable flavor as a beer-taste beverage in each of the above steps, an aroma component such as a fatty acid ester, ethyl acetate, or isoamyl acetate may be added in any steps up to filling. In each of the above steps, the carbon dioxide-extracting product may be added in any steps up to filling, and it is preferable that the carbon dioxide-extracting product is added in the step before filtration of the stored liquor, from the viewpoint of the component migration rate.

As to the beer-taste beverage containing an alcohol produced without using malts as raw materials, a liquid sugar containing a carbon source, a nitrogen source as an amino acid-containing material other than wheat or malts, hops, a pigment, and the like are mixed together with a hot water, to provide a liquid sugar-containing solution. The liquid sugar-containing solution is boiled. When hops are used as raw materials, the hops may be mixed with the liquid sugar-containing solution during boiling, not before the beginning of boiling. As a substitute for this saccharified liquid, hops may be added to an extract using raw materials other than malts added with a hot water, and a mixture may be boiled. The hops may be mixed at any stage from the beginning of boiling to before the termination of boiling. As the conditions in the fermentation and storage (stored liquor) steps, known conditions may be used. The fermentation liquid obtained is filtered, and a carbon dioxide gas is added to a filtrate obtained. Thereafter, a vessel is filled, and subjected to a sterilizing step, to obtain an intended beer-taste beverage. At this time, in order to obtain a more preferable flavor as a beer-taste beverage in each of the above steps, an aroma component such as a fatty acid ester, ethyl acetate, or isoamyl acetate may be added in any steps up to filling. In each of the above steps, the carbon dioxide-extracting product may be added in any steps up to filling, and it is preferable that the carbon dioxide-extracting product is added in the step before filtration of the stored liquor, from the viewpoint of the component migration rate.

As to the beer-taste beverage which is non-fermented and contains an alcohol, the beer-taste beverage may be one in which an alcohol content of a final manufactured product is adjusted by adding an alcohol for raw materials and the like, irrespective of malts being used or unused. The alcohol for raw materials may be added in any steps from the saccharification step to the filling step. In each of the above steps, in order to obtain a more preferred flavor as the beer-taste beverage, an aroma component such as a fatty acid ester, ethyl acetate, or isoamyl acetate may be added in any steps up to filling. In each of the above steps, the carbon dioxide-extracting product may be added in any steps up to filling, and it is preferable that the carbon dioxide-extracting product is added in the step before filtration of the stored liquor, from the viewpoint of the component migration rate.

One embodiment of the beer-taste beverage according to the present invention includes nonalcoholic beer-taste beverages, which can be produced in the same manner as general nonalcoholic beer-taste beverages except that a carbon dioxide-extracting product obtained in the separating step is added during the production steps of the beer-taste beverage. The production steps for a general non-fermented nonalcoholic beer-taste beverage will be shown as follows. A nonalcoholic beer-taste beverage such as a nonalcoholic beer can be easily produced by not having a fermentation step with an yeast. General non-fermented nonalcoholic beer-taste beverages are ones produced using malts as raw materials or ones without using them, and each can be produced as follows.

As to the nonalcoholic beer-taste beverage produced by using malts as raw materials, first, to a mixture containing raw materials such as wheat such as malts, optionally other grains, starches, and sugars, and a bittering agent, or a colorant, and water is added an enzyme such as amylase optionally to carry out gelatinization or saccharification, and the mixture is then filtered, to provide a saccharified liquid. Hops, a bittering agent or the like is optionally added to the saccharified liquid, and a mixture is boiled, to remove solid contents such as coagulated proteins in a clearing tank. As a substitute for this saccharified liquid, hops may be added to a malt extract added with a hot water, and a mixture may be boiled. The hops may be mixed at any stage from the beginning of boiling to before the termination of boiling. As the conditions in the saccharification step, the boiling step, the solid content removal step, and the like, known conditions may be used. After boiling, the wort obtained is filtered, and a carbon dioxide gas is added to a filtrate obtained. Thereafter, a vessel is filled, and subjected to a sterilizing step, to obtain an intended nonalcoholic beer-taste beverage. In order to obtain a more preferable flavor as a beer-taste beverage in each of the above steps, an aroma component such as a fatty acid ester, ethyl acetate, or isoamyl acetate may be added in any steps up to filling. In each of the above steps, the carbon dioxide-extracting product may be added in any steps up to filling, and it is preferable that the carbon dioxide-extracting product is added in the step before filtration of the stored liquor, from the viewpoint of the component migration rate.

In the case of producing a nonalcoholic beer-taste beverage without using malts as raw materials, first, a liquid sugar containing a carbon source, a nitrogen source as an amino acid-containing material other than wheat or malts, hops, a pigment, and the like are mixed together with a hot water, to provide a liquid sugar-containing solution. The liquid sugar-containing solution is boiled. When hops are used as raw materials, the hops may be mixed with the liquid sugar-containing solution during boiling, not before the beginning of boiling. A carbon dioxide gas is added to the liquid sugar-containing solution after boiling. Thereafter, a vessel is filled, and subjected to a sterilizing step, to obtain an intended nonalcoholic beer-taste beverage. In order to obtain a more preferable flavor as a beer-taste beverage in each of the above steps, an aroma component such as a fatty acid ester, ethyl acetate, or isoamyl acetate may be added in any steps up to filling. In each of the above steps, the carbon dioxide-extracting product may be added in any steps up to filling, and it is preferable that the carbon dioxide-extracting product is added in the step before filtration of the stored liquor, from the viewpoint of the component migration rate.

The term "beer-taste beverage" as used herein refers to a carbonated beverage having a beer-like flavor. In other words, the beer-taste beverage of the present specification embraces all the carbonated beverages having a beer flavor, unless specified otherwise. Among them, the term "nonalcoholic beer-taste beverage" refers to a beer-taste beverage having an alcoholicity of less than 1%, and preferably does not substantially contain an alcohol. The beverage of the embodiment that substantially does not contain an alcohol does not intend to exclude a beverage containing a very small amount of alcohol to an extent that is undetectable. A beverage of which alcoholicity would be rounded off to 0.0%, and especially a beverage of which alcoholicity is rounded off to 0.00%, is embraced in the nonalcoholic beer-taste beverage. The kinds of the beer-taste beverage of the present invention include, for example, nonalcoholic beer-taste beverages, beer-taste refreshing beverages, and the like. Here, the term "alcoholicity (alcohol content)" as used herein means the content of ethanol, but an aliphatic alcohol is not included therein.

The alcoholicity of the beer-taste beverage according to the present invention means a content (v/v%) of an alcoholic content of the beverage, and the alcoholicity can be measured by any of known methods. For example, the alcoholicity can be measured with an oscillating densitometer. Specifically, a sample in which a carbon dioxide gas is degassed from a beverage by filtration or ultrasonication is prepared, and the sample is distilled with direct flame, and a density of the distillated solution obtained is measured at 15°C, and the alcoholicity can be converted and obtained from "Table 2 Alcoholic Content and Density (15°C) and Specific Gravity (15/15°C) Conversion Table" which is an annex to Internal Revenue Bureau, Specified Analysis Method (2007 Internal Revenue Bureau Order No. 6, revised June 22, 2007). In a case of a low concentration with an alcoholicity of less than 1.0%, a commercially available alcohol measurement instrument or gas chromatography may be used.

An aliphatic alcohol may be added to the beer-taste beverage according to the present invention, from the viewpoint of giving a liquor-taste. The aliphatic alcohol is not particularly limited so long as it is a known one, and an aliphatic alcohol having 4 to 5 carbon atoms is preferred. In the present invention, preferred aliphatic alcohols include aliphatic alcohols having 4 carbon atoms such as 2-methyl-1-propanol and 1-butanol; and aliphatic alcohols having 5 carbon atoms such as 3-methyl-1-butanol, 1-pentanol, and 2-pentanol. These aliphatic alcohols can be used alone or in a combination of two or more kinds. The content of the aliphatic alcohol having 4 to 5 carbon atoms is preferably from 0.0002 to 0.0007% by mass, and more preferably from 0.0003 to 0.0006% by mass. In the present specification, the content of the aliphatic alcohol can be measured by using a headspace gas chromatography.

### (Calories)

Among the beer-taste beverages according to the present invention, it is desired that the nonalcoholic beer-taste beverage is low in calories, matching in the favor of low-calorie diets in the recent years. Therefore, the beer-taste beverage according to the present invention has the number of calories of preferably less than 5 kcal/100 mL, more preferably less than 4 kcal/100 mL, and even more preferably less than 3 kcal/100 mL.

The number of calories included in the beer-taste beverage according to the present invention is basically calculated in accordance with "Method for Analyzing and the like Nutrient Ingredients etc. in Nutritional Labelling Standards" published in association with the Health Promotion Act. In other words, in principle, the number of calories can be calculated as a total sum of the amount of the various nutrient ingredients quantified multiplied by an energy conversion coefficient of each ingredient (protein: 4 kcal/g, fat: 9 kcal/g, saccharide: 4 kcal/g, dietary fibers: 2 kcal/g, alcohol: 7 kcal/g, or organic acid: 3 kcal/g). For details, see "Method for Analyzing and the like Nutrient Ingredients etc. in Nutritional Labelling Standards."

Specific measurement methods for the amounts of each of nutrient ingredients contained in the beer-taste beverage according to the present invention may be carried out in accordance with various methods of analyses described in the Health Promotion Act, "Method for Analyzing and the like Nutrient Ingredients etc. in Nutritional Labelling Standards." Alternatively, if requested to Incorporated Foundation, Japan Food Research Laboratories, one can know the calories and/or each of amounts of nutrient ingredients.

### (Saccharides)

The saccharides contained in the beer-taste beverage according to the present invention refer to saccharides based on the Nutritional Labelling Standards for Foods (2003 Ministry of Health, Labour, and Welfare, Announcement No. 176). Specifically, the saccharides refer to a group of foods from which proteins, fats, dietary fibers, ashes, alcohols, and water are excluded. In addition, the amount of saccharides in the foods is calculated by deduction of the amounts of proteins, fats, dietary fibers, ashes, and water from the weight of the above foods. In this case, the amounts of proteins, fats, dietary fibers, ashes, and water are measured by the methods set out in the Nutrition Labelling Standards. Specifically, the amount of proteins is measured by nitrogen quantification conversion method; the amount of fats is measured by an ether extraction method, a chloroform-methanol liquid mixture extraction method, a Gerber method, an acid decomposition method or a Roese-Gottlieb method; the amount of dietary fibers is measured by high-performance liquid chromatography or Prosky method; the amount of ashes is measured by a method of ashing with magnesium acetate, a direct ashing method, or a method of ashing with sulfuric acid; and the amount of water is measured by Karl-Fischer method, a method using a drying aid, a vacuum thermal drying method, an atmospheric thermal drying method, or a plastic film method.

It is desired that the beer-taste beverage according to the present invention is low in saccharides, matching in the favor of the low carbohydrate diet in the recent year. Therefore, the content of the saccharides of the beer-taste beverage according to the present invention is preferably less than 0.5 g/100 mL, more preferably 0.4 g/100 mL or less, and even more preferably 0.3 g/100 mL or less. In addition, the lower limit of the content is, but not particularly set to, usually 0.1 g/100 mL or so, and, for example, the content may be 0.15 g/100 mL or more, or may be 0.2 g/100 mL or more.

### (Acidulant)

As the acidulant used in the beer-taste beverage according to the present invention, it is preferable to use one or more acids selected from the group consisting of citric acid, lactic acid, phosphoric acid, and malic acid. In addition, in the present invention, as an acid other than the above acids, succinic acid, tartaric acid, fumaric acid, glacial acetic acid or the like can be used. These acidulants can be used without limitations so long as the acidulants are accepted to be added to foods. In the present invention, it is preferable to use a combination of lactic acid from the viewpoint of appropriately giving a moderate sour taste, and phosphoric acid from the viewpoint of appropriately giving an sour taste with a slightly stimulating taste.

The content of the acidulant in the beer-taste beverage according to the present invention, calculated in terms of citric acid, is preferably 200 ppm or more, more preferably 550 ppm or more, and even more preferably 700 ppm or more, from the viewpoint of giving a beer-taste feel, and the content is preferably 15000 ppm or less, more preferably 5500 ppm or less, and even more preferably 2000 ppm or less, from the viewpoint of acidity. Therefore, in the present invention, the content of the acidulant, calculated in terms of citric acid, includes preferred ranges such as from 200 ppm to 15000 ppm, preferably from 550 ppm to 5500 ppm, and more preferably from 700 ppm to 1500 ppm. Here, the amount calculated in terms of citric acid as used herein refers to an amount converted from an acidity of each of the acidulants on the basis of the acidity of citric acid. For example, the amount which is equivalent to 100 ppm of lactic acid, calculated in terms of citric acid, is 120 ppm, the amount which is equivalent to 100 ppm of phosphoric acid, calculated in terms of citric acid, is 200 ppm, and the amount which is equivalent to 100 ppm of malic acid, calculated in terms of citric acid, is 125 ppm.

The content of the acidulant in the beer-taste beverage refers to those calculated by analyzing with high-performance liquid chromatography (HPLC) or the like.

### (Hops)

In the beer-taste beverage according to the present invention, hops can be used as a part of the raw materials. Since the flavor tends to resemble beer, it is desired that hops are used in a part of the raw materials. When hops are used, usual pellet hops, powder hops or a hop extract used in the production of beer and the like can be appropriately selected and used in accordance with a desired flavor. In addition, hop processed products such as isomerized hops and reduced hops may be used. The hops used in the beer-taste beverage according to the present invention embrace those products. Also, the amount of the hops is, but not particularly limited to, typically from 0.0001 to 1% by weight or so, based on the entire amount of the beverage.

### (Other Raw Materials)

In the beer-taste beverage according to present invention, other raw materials may be optionally used within the range that would not inhibit the effects of the present invention. For example, a sweetener (including a high-intensity sweetener), a bittering agent, a flavor (aromatic), an yeast extract, a colorant such as a caramel pigment, a plant-extracted saponin-based material such as soybean saponin or quillai saponin, a vegetable protein such as maize or soybeans, and a peptide-containing product, a proteinaceous material such as bovine serum albumin, dietary fibers, a seasoning such as amino acids, or an antioxidant such as ascorbic acid can optionally be used within the range that would not inhibit the effects of the present invention.

Thus, a beer-taste beverage according to the present invention is obtained. The pH of the beer-taste beverage according to the present invention is from 3.0 to 5.0, preferably from 3.5 to 4.5, and more preferably 3.5 to 4.0, from the viewpoint of making the flavor of the beverage favorable.

One embodiment of the beer-taste beverage according to the present invention includes a beer-taste beverage, in which the content of at least one of valencene and nootkatone in the beverage is preferably 1.0 ppb or less, more preferably 0.5 ppb or less, and even more preferably 0.1 ppb or less, and the ratio of a content of limonene to a content of linalool (limonene / linalool) is preferably 1.0% or more, more preferably 5.0% or more, and even more preferably 10.0% or more, from the viewpoint of favorably providing a flavor of coriander seeds.

One embodiment of the beer-taste beverage according to the present invention includes a beer-taste beverage, in which the content of at least one of valencene and nootkatone in the beverage is preferably 1.0 ppb or less, more preferably 0.5 ppb or less, and even more preferably 0.1 ppb or less, and the ratio of a content of γ-terpinene to a content of linalool (y-terpinene / linalool) is preferably 0.5% or more, preferably 4.0% or more, and even more preferably 9.0% or more, from the viewpoint of favorably providing a flavor of coriander seeds.

### (Container-Packed Beverage)

The beer-taste beverage according to the present invention can be packed into a container. The shapes of the containers are not limited in any manners, and the beer-taste beverage can be packed into a tightly sealed container such as a glass bottle, a can, a barrel, or a plastic bottle, whereby a beverage contained in a container can be provided.

### EXAMPLES

The present invention will be specifically described hereinbelow by the Examples, without intending to limit the scope of the present invention to the following Examples.

### Preparation Examples 1 to 3 of Carbon Dioxide-Extracting Products

Using a carbon dioxide circulation-type apparatus shown in FIG. 1, powdered products of coriander seeds as raw materials were extracted under the conditions listed in Table 1. The extracting product obtained was centrifuged to obtain only an oil layer, to provide a coriander seed-extracting product. The results are shown in Table 1. Here, the average weight of the extraction oil in Table 1 is an average weight of an oil layer obtained by testing three times at each of the testing conditions.

### Ingredient Analysis of Coriander Seed-Extracting Products

The quantification for a particular ingredient in a coriander seed-extracting product obtained in the preparation examples for carbon dioxide-extracting products was made by weighing out a carbon dioxide-extracting product, extracted on the basis of a certain weight of the starting raw materials, diluting the extracting product properly with ethanol and dichloromethane, and subjecting the dilution to quantification analysis in accordance with GC-MS (SIM method). As the column, VF-WAXms, manufactured by Agilent, 60 m × 250 µm × 0.5 µm, was used. The amount of ingredient, ppm, was calculated from the dilution folds. The results are shown in Table 1.

In addition, as to the mass ratio, %, of a particular ingredient in the coriander seed-extracting product, a mass ratio was calculated from a concentration of an extracting product obtained by steam distillation shown in a literature value, and comparison was made. The results are shown in Table 1. As the "literature value," the values of a literature "International Scholarly Research Network, ISRN Pharmaceutics, 2012, Article ID 263517, page 3, Table 1" disclosing the results of subjecting coriander seeds to steam distillation were used.

### [Table 1]

**Table 1**

| | Preparation Examples | | | Literature Value |
|---|---|---|---|---|
| | 1 | 2 | 3 | |
| Extraction pressure, MPa | 15.0 | 30 | 6.5 | |
| Extraction temperature, °C | 50 | 50 | 10 | |
| Separation temperature, °C | 18 | 18 | 18 | |
| Separation pressure, MPa | 4.8 | 4.8 | 4.8 | |
| Extraction time, hr | 1.5 | 1.5 | 1.5 | |
| S/F | 45 | 45 | 45 | |
| Raw materials used, g | 1000 | 1000 | 1000 | |
| CO₂ Density, kg/m³ | 702 | 871 | 888 | |
| Average weight of extraction oil, g | 20 | 219 | 64.2 | |
| Linalool, ppm*¹ | 132821 | 4144 | 5212 | 575700 |
| Limonene, ppm*¹ | 2451 | 172 | 282 | 6200 |
| γ-Terpinene, ppm*¹ | 2898 | 193 | 314 | 3900 |
| Limonene / Linalool, % | 1.8 | 4.2 | 5.4 | 1.1 |
| γ-Terpinene / Linalool, % | 2.2 | 4.7 | 6.0 | 0.7 |

| | | | | |
|---|---|---|---|---|
| *1: The literature values are expressed in %. | | | | |

It can be seen from Table 1 that from the comparison of the steam distillation (literature value) and the carbon dioxide extraction (each preparation example), the mass ratio of limonene to linalool (limonene / linalool) and the mass ratio of γ-terpinene to linalool (y-terpinene / linalool) were high in the extraction with carbon dioxide.

### Preparation of Evaluation Solutions

### Examples 1 to 3

One hundred grams of 20 mM citrate buffer, pH 5.3, was weighed out in a 200 ml-two-neck flask with angled arm, and an interchangeable Allihn condenser (cooling device) (20°C) was set therein, and the contents were heated to 100°C. As shown in Table 2, a coriander seed-extracting product of each of Preparation Examples 1 to 3 in an amount equivalent to 0.2 g powder weight (raw materials) was added thereto, and a mixture was held for 20 minutes. Thereafter, the mixture was immediately ice-cooled, and a water content evaporated by heating was calculated with a meter, and water of the evaporated amount was added thereto to recover to the weight before heating. Further, the mixture was filtered with a disc filter having a pore size of 0.45 µm, to obtain a filtrate. This filtrate was used as evaluation solutions for Examples 1 to 3.

### Comparative Example 1

One hundred grams of 20 mM citrate buffer, pH 5.3, was weighed out in a 200 ml-two-neck flask with angled arm, and an interchangeable Allihn condenser (cooling device) (20°C) was set therein, and the contents were heated to 100°C. Thereto were supplied 0.2 g of powdered products of coriander seeds, and the heater was immediately turned off, and the mixture was held for 20 minutes. Thereafter, the mixture was immediately ice-cooled, and a water content evaporated by heating was calculated with a meter, and water of the evaporated amount was added thereto to recover to the weight before heating. Further, the mixture was filtered with a disc filter having a pore size of 0.45 µm, to obtain a filtrate. This filtrate was used as an evaluation solution for Comparative Example 1.

### Sensory Evaluations of Evaluation Solutions

Each of the evaluation solutions of Examples 1 to 3 and Comparative Example 1 was poured into a glass for sensory evaluation, and scoring was carried out on "curry-like spiciness" and "citrus-like aroma" characterizing the flavor of coriander seeds on the basis of the following criteria. All the evaluations were performed on eight individuals, and an average score was calculated. The results are shown in Table 2.
- 0:: not sensed or tasted at all;
- 1:: faintly sensed or tasted;
- 2:: slightly sensed or tasted;
- 3:: clearly sensed or tasted;
- 4:: strongly sensed or tasted; and
- 5:: very strongly sensed or tasted.

### Ingredient Analyses of Evaluation Solutions

The quantification of the ingredients contained in each of the evaluation solution was carried out by concentration with a solid phase extraction and GC-MS (SIM method). To 2.0 g of each evaluation solution was added 3-heptanol so as to have a final concentration of 50 ppb, and one sheet of a solid phase MonoTrap DCC18, manufactured by GL Science was added thereto, and immersed for 30 minutes. MonoTrap was taken out, 200 µL of dichloromethane was added to a cup specialized for MonoTrap extraction, and the mixture was subjected to ultrasonic irradiation for 5 minutes. The dichloromethane solution was collected in a GC vial, and subjected to quantitative analysis according to GC-MS (SIM method). As the column, VF-WAXms manufactured by Agilent, 60 m × 250 µm × 0.5 µm was used. The results of the ingredient quantification for each evaluation solution are shown in Table 2.

### [Table 2]

**Table 2**

| | Ex. | | | Comp. Ex. |
|---|---|---|---|---|
| | 1 | 2 | 3 | 1 |
| Extracting Product Added | Extracting Product of Prep. Ex. 1 | Extracting Product of Prep. Ex. 2 | Extracting Product of Prep. Ex. 3 | |
| Linalool, ppb | 523 | 784 | 712 | 815 |
| Limonene, ppb | 12 | 93 | 88 | 2 |
| γ-Terpinene, ppb | 9 | 75 | 70 | 0.1 |
| Limonene / Linalool, % | 2.3 | 11.9 | 12.4 | 0.2 |
| γ-Terpinene / Linalool, % | 1.6 | 9.6 | 9.8 | 0.01 |
| Curry-like spiciness | 2.9 | 4.0 | 4.2 | 2.7 |
| Citrus-like aroma | 3.0 | 4.3 | 4.5 | 2.5 |

In the evaluation solutions of Examples 1 to 3 to which a carbon dioxide-extracting product was added, the curry-like spicy aroma and the citrus-like aroma, characteristic aromas of the coriander seeds, were excellent, as compared to the evaluation solution of Comparative Example 1 in which coriander seeds were supplied into a citrate buffer, and the evaluation solution was extracted with heating. Here, in each of Examples and Comparative Example, the evaluation was made using a simulated solution, and the same evaluations can be obtained also for the beer-taste beverages.

### Preparation and Sensory Evaluations of Beer-Taste Beverage

Malts were supplied into a mash kettle to carry out saccharification, and then filtered to remove husks or the like, to give a wort. Next, to a wort obtained, a hop extract and hop pellets were added to boil, to remove solid contents such as coagulated proteins in a clearing tank, to give a clear wort. Next, an yeast was added to the clear wort obtained above to carry out fermentation. A carbon dioxide-extracting product obtained in each preparation example was added to the filtered beer that went through the steps of storage (stored liquor), the mixture after adjustment of a carbon dioxide gas pressure was packed in a bottle, and the contents were subjected to sensory evaluations. As a result, evident curry-like spicy aroma and citrus-like aroma could be obtained.

### INDUSTRIAL APPLICABILITY

The present invention provides a beer-taste beverage which is capable of favorably providing a flavor of coriander seeds and a method for producing the same, which can provide a new taste as luxury products.

### EXPLANATION OF NUMERALS

- 1: an extraction tank;
- 2: an evaporation device;
- 3: a separation tank;
- 4: a condenser;
- 5: a storage tank;
- 6: a cooling device;
- 7: a high-pressure pump; and
- 8: a heat exchanging device.

## Claims

1. A beer-taste beverage, comprising a carbon dioxide-extracting product of a plant raw material comprising coriander seeds.

2. The beer-taste beverage according to claim 1, wherein the ratio of a content of limonene to a content of linalool in the carbon dioxide-extracting product (limonene / linalool) is 1.5% or more.

3. The beer-taste beverage according to claim 1 or 2, wherein the ratio of a content of γ-terpinene to a content of linalool in the carbon dioxide-extracting product (y-terpinene / linalool) is 1.5% or more.

4. A method for producing a beer-taste beverage, comprising
extracting step: extracting a plant extract from a plant raw material comprising coriander seeds with carbon dioxide as an extraction solvent,
separating step: separating the plant extract extracted in the extracting step from carbon dioxide, and
adding step: adding a carbon dioxide-extracting product obtained in the separating step during the production steps for a beer-taste beverage.

5. The method for production according to claim 4, wherein the temperature in the separating step is 40°C or lower.

6. The method for production according to claim 4 or 5, wherein the carbon dioxide density in the extracting step is from 400 to 1000 kg/m³.

7. The method for production according to any one of claims 4 to 6,
wherein the pressure of carbon dioxide in the extracting step is from 6 to 50 MPa.

8. The method for production according to any one of claims 4 to 7,
wherein the temperature in the separating step is 20°C or lower.

9. The method for production according to any one of claims 4 to 8,
wherein the ratio of a content of limonene to a content of linalool in the carbon dioxide-extracting product obtained in the separating step (limonene / linalool) is 1.5% or more.

10. The method for production according to any one of claims 4 to 9,
wherein the ratio of a content of γ-terpinene to a content of linalool in the carbon dioxide-extracting product obtained in the separating step (y-terpinene / linalool) is 1.5% or more.

11. A beer-taste beverage wherein a content of valencene is 1.0 ppb or less, or a content of nootkatone is 1.0 ppb or less, and wherein a ratio of a content of limonene to a content of linalool (limonene / linalool) is 1.0% or more.

12. A beer-taste beverage wherein a content of valencene is 1.0 ppb or less, or a content of nootkatone is 1.0 ppb or less, and wherein a ratio of a content of γ-terpinene to a content of linalool (y-terpinene / linalool) is 0.5% or more.
